(19) Europäisches Patentamt
European Patent Office
Office européen des brevets

(11) Veröffentlichungsnummer: **0 083 553**
**B1**

(12) **EUROPÄISCHE PATENTSCHRIFT**

(45) Veröffentlichungstag der Patentschrift: **04.09.85**

(21) Anmeldenummer: **82810558.5**

(22) Anmeldetag: **20.12.82**

(51) Int. Cl.⁴: **C 09 B 25/00**, C 09 B 29/36, D 06 P 1/16, D 06 P 5/00 // C09D11/02, B41M5/025

(54) **Farbstoffmischung und deren Verwendung im Transferdruck.**

(30) Priorität: **24.12.81 CH 8281/81**

(43) Veröffentlichungstag der Anmeldung: **13.07.83 Patentblatt 83/28**

(45) Bekanntmachung des Hinweises auf die Patenterteilung: **04.09.85 Patentblatt 85/36**

(84) Benannte Vertragsstaaten: **AT BE CH DE FR GB IT LI NL**

(56) Entgegenhaltungen:
**EP - A - 0 005 948**
**DE - A - 2 738 084**
**DE - A - 2 753 235**
**DE - A - 2 754 653**
**DE - A - 2 824 829**
**FR - A - 1 917 278**

(73) Patentinhaber: **CIBA-GEIGY AG, Postfach, CH-4002 Basel (CH)**

(72) Erfinder: **Bäuerle, Rolf, Im Hirshalm 9, CH-4125 Riehen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft eine Farbstoffmischung enthaltend den Farbstoff der Formel

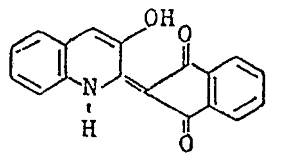

(I)

und den Farbstoff der Formel II

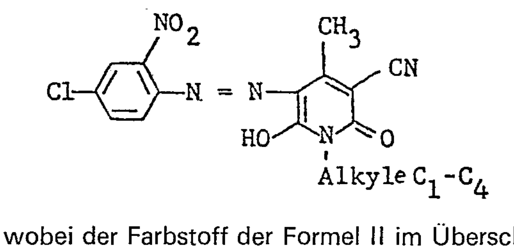

(II)

wobei der Farbstoff der Formel II im Überschuss vorliegt, die Verwendung der Farbstoffmischung im Transferdruck, das unter Verwendung der Farbstoffmischung im Transferdruck bedruckte Textilmaterial, sowie Druckfarben enthaltend die Farbstoffmischung und damit bedruckte Hilfsträger.

Der Farbstoff der Formel I (C.I. Disperse Yellow 54 – C.I. 47020) und dessen Verwendung im Transferdruck sind bekannt. Nachteil dieses Farbstoffes, mit dem man auf Polyestergewebe kräftige gelbe Töne erhält, ist allerdings dessen hoher Dampfdruck bei den, im Transferdruck üblichen Temperaturen von 150 bis 220° C. In diesem Temperaturbereich sublimiert der Farbstoff zu schnell, was zu unscharfen Drucken führt. Insbesondere in Mischung mit anderen Transferfarbstoffen erhält man Drucke mit diffusen gelben Rändern, sogenannten Aureolen.

Die Farbstoffe der Formel II sind ebenfalls bekannt (U.S. Patent Nr. 3905951) oder nach den für Azofarbstoffe üblichen Methoden zugänglich. Diese Farbstoffe haben jedoch bei Temperaturen um 200° C einen geringen Dampfdruck und sind daher im Transferdruck bislang noch nicht zur Anwendung gelangt, da sie farbschwache, in der Praxis unbrauchbare Drucke ergeben.

Der vorliegenden Erfindung lag die Aufgabe zugrunde, die Transfercharakteristik des Farbstoffes der Formel I dahingehend zu beeinflussen, dass dieser unter den angewandten Bedingungen konturenscharfe, aureolenfreie Drucke ergibt.

Diese Aufgabe wird erfindungsgemäss dadurch gelöst, dass man den Farbstoff der Formel I im Gemisch mit einem Farbstoff der Formel II verwendet, wobei der Farbstoff der Formel II im Überschuss vorliegt.

Diese Gemische zeigen überraschenderweise ein ausgeglichenes Transferverhalten und liefern farbstarke Drucke mit punktscharfem Druckbild. Ferner hat sich gezeigt, dass die Farbstoffe der Formeln I und II im Gemisch zu tieferen Tönen aufbauen und somit ergiebiger sind als die Einzelfarbstoffe.

Die Transfercharakteristik der Farbstoffmischung ist ferner ähnlich der, anderer, im Transferdruck verwandter Farbstoffe, wodurch sich die erfindungsgemässe Gelbmischung gut mit anderen Transferfarbstoffen kombinieren lässt.

Die Alkylgruppe im Farbstoff der Formel II weist 1 bis 4 C-Atome auf und ist unverzweigt oder verzweigt. Es handelt sich beispielsweise um die Methyl-, Äthyl-, n-Propyl-, n-Butyl- und iso-Butylgruppe. Als Mischungskomponente bevorzugt sind die Farbstoffe der Formel II, in denen der Pyridonstickstoff einen Äthyl- oder n-Butylrest trägt.

Besonders farbstarke und konturenscharfe Drucke auf Polyestermaterial erhält man mit Farbstoffmischungen, die auf 1 Gew.-Teil Farbstoff der Formel I, 1,1 bis 3 Gew.-Teile Farbstoff der Formel II, insbesonder 1,5 Gew.-Teile Farbstoff der Formel II enthalten.

Verwendet wird das erfindungsgemässe Farbstoffgemisch im Transferdruck. Dabei lässt sich das Farbstoffgemisch problemlos in hoher Konzentration in leicht giessbare elektrolyt- und dispergatorarme Druckpasten einarbeiten, die wegen des geringen Druckpastenauftrages auf papier sehr gesucht sind. Das Farbstoffgemisch gelangt als solches zur Anwendung oder auch in Kombination mit mindestens einem weiteren für den Transferdruck geeigneten Farbstoff.

Geeignete Substrate sind halb- und vollsynthetische Textilmaterialien, vor allem Gewebe und Gewirke aus Polyamid 6, Polyamid 6.6, Polyacrylnitril, Cellulosetriacetat, und insbesondere Polyester, wie Polyäthylenglykolterephthalat.

Die Druckfarben, die neben ggfs. weiteren Transferfarbstoffen ein Gemisch der Farbstoffe der Formeln I und II enthalten, und mit denen der jeweilige Hilfsträger bedruckt oder imprägniert wird, sind wässerige oder wässerig-organische Druckpasten oder organische Drucktinten.

Wässerige und wässerig-organische Druckpasten enthalten neben dem erfindungsgemässen Farbstoffgemisch und ggfs. weiteren Transferfarbstoffen, die üblichen natürlichen oder synthetischen Verdicker, beispielsweise Polyvinylalkohole, Methylcellulose oder Carboxygruppen enthaltende Polymerisationsprodukte, beispielsweise Polyacrylate.

Organische Drucktinten bestehen im allgemeinen aus einem Bindemittel, einem Dispergiermittel und einem organischen Lösungsmittel, wie z. B. Isopropylalkohol.

Sowohl Druckpasten als auch Drucktinten können noch weitere eigenschaftsverbessernde Bestandteile enthalten, wie Konservierungsmittel, Füllstoffe, Entlüftungsmittel oder Feuchthaltemittel.

Die Druckfarben können in allen üblichen Druckverfahren, also Hoch-, Flach-, Tief- oder Siebdruck, angewandt werden. Besonders geeignete Verfahren zur Herstellung von bedruckten Papierhilfsträgern sind der Tiefdruck und der Rotationsfilmdruck.

Als Hilfsträger eignen sich alle flächenförmigen Gebilde, die inert gegenüber den aufgebrachten Farbstoffen sind und die Sublimation nicht behindern (ss. z. B. DT-OS Nr. 1771812 oder 2443063). In Betracht kommen Metallfolien, wie Aluminiumfolien oder insbesondere Papierbahnen.

In den folgenden Beispielen beziehen sich Angaben über Teile und Prozente, sofern nichts anderes vermerkt ist, auf das Gewicht.

*Beispiel 1:*

Ein Hilfsträger aus Papier wird im Rotationsdruckverfahren mit einer Druckpaste der folgenden Zusammensetzung bedruckt:

16 g Farbstoffpräparat bestehend aus 46,24% Farbstoff der Formel I, 0,1% Ligninsulfonat, 5,28% eines Blockpolymeren aus 80% Äthylenoxid und 20% Propylenoxid mit einem Molgewicht von 16250, 21,13% Propylenglykol, 0,29% Chloracetamid, 0,81% Formalin 30%ig und 26,21% Wasser; 24 g Farbstoffpräparat bestehend aus 45% Farbstoff der Formel II, worin Alkyl $C_1$-$C_4$ gleich Äthyl ist, o,11% Ligninsulfonat, 5,62% eines Äthylenoxid/Propylenoxid-Blockpolymeren der genannten Zusammensetzung (MG 16250), 22,5% Propylenglykol, 0,27% Chloracetamid, 0,76% Formalin 30%ig und 25,71% Wasser, (Mischungsverhältnis von Farbstoff I zu Farbstoff II wie 1:1,5);

32 g Acrylatverdicker (Konzentrat, enthalten 15% vorneutralisierte Polyacrylsäure); 48 g 3%ige Natronlauge; 4,8 g Entlüftungsmittel auf Basis 2-Äthylhexanol;

120 g einer 20%igen Lösung eines Polyvinylalkohols; 0,8 g Formalin 35%ig und 754,4 g Wasser.

Der Auftrag erfolgt stellenweise oder ganzflächig. Der bedruckte Hilfsträger wird bei 100°C während 5 bis 10 s getrocknet. Er ist reibecht und jederzeit zum Bedrucken von synthetischen Fasermaterialien nach dem thermischen, trockenen Transferdruckverfahren einsetzbar.

Zum Bedrucken des Fasermaterials wird der Hilfsträger und ein Polyestergewebe mit einem Flächengewicht von 100 g/m² während 30 s bei 210°C in einer Bügelpresse bei einem Druck von 0,04 bis 0,06 bar zusammengepresst. Nach dem Transferieren des Farbstoffgemisches vom Zwischenträger auf das Polyestergewebe erhält man auf dem Gewebe gelbe, intensive Musterungen mit scharfen Konturen.

Druckt man auf andere Fasermaterialien, wie Polyacrylnitril, Cellulosetriacetat oder Polyamid, so erhält man ebenfalls farbstarke Drucke. Verwendet man anstelle der Farbstoffmischung die Farbstoffe I oder II alleine, so erhält man in beiden Fällen deutlich hellere Drucke, die im Fall der Farbkomponente I zudem nicht konturenscharf sind.

*Beispiel 2:*

Ein Hilfsträger aus Papier wird im Rotationsdruckverfahren mit einer Druckpaste der folgenden Zusammensetzung bedruckt:

10 g Farbstoffpräparat, enthaltend den Farbstoff der Formel I, mit der im Beispiel 1 angegebenen Zusammensetzung; 15 g Farbstoffpräparat, enthaltend den Farbstoff der Formel II, worin Alkyl $C_1$-$C_4$ gleich Äthyl ist, mit der im Beispiel 1 angegebenen Zusammensetzung; 15 g Farbstoffpräparat, bestehend aus 27,76% eines Gemisches zweier Farbstoffe der Formel

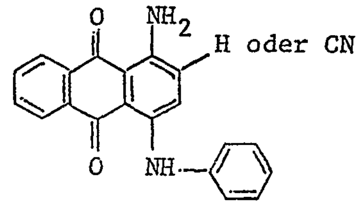

0,1% Ligninsulfonat, 4,94% eines Äthylenoxid/Propylenoxid-Blockpolymeren der genannten Zusammensetzung (MG 16250), 19,5% Äthylenglykol, 0,3% Chloracetamid, 0,84% Formaldehyd 30%ig und 46,56% Wasser; die weiteren Komponenten, wie Verdicker, Entlüftungsmittel, Antimikrobica und Wasser, werden in den im Beispiel 1 angegebenen Mengen zugesetzt.

Der bedruckte Hilfsträger wird bei 100°C während 5 bis 10 s getrocknet.

Bedruckt man mit dem so hergestellten Hilfsträger, wie im Beispiel 1 beschrieben, ein Polyestergewebe, so erhält man einen konturenscharfen, aureolenfreien grünen Druck.

Verwendet man anstelle der Farbstoffe der Formeln I und II nur den Farbstoff der Formel I, jedoch in einer Menge mit der die gleiche grüne Nuance erreicht wird, so erhält man unbrauchbare Ergebnisse. Die Gelbkomponente der Formel I führt zu Drucken mit unscharfen gelben Rändern, sogenannten Aureolen.

## Patentansprüche

1. Farbstoffmischung enthaltend den Farbstoff der Formel (I)

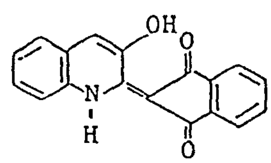

(I)

und den Farbstoff der Formel (II)

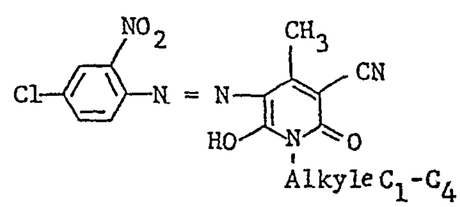

(II)

wobei der Farbstoff der Formel (II) im Überschuss vorliegt.

2. Farbstoffmischung gemäss Anspruch 1, dadurch gekennzeichnet, dass Alkyl $C_1$-$C_4$ in Formel (II) den Äthyl- oder n-Butylrest bedeutet.

3. Farbstoffmischung gemäss den Ansprüchen 1 und 2, dadurch gekennzeichnet, dass diese 1 Gew.-Teil des Farbstoffes der Formel (I) und 1,1 bis 3 Gew.-Teile des Farbstoffes der Formel (II) enthält.

4. Farbstoffmischung gemäss den Ansprüchen 1 bis 3, dadurch gekennzeichnet, dass diese 1 Gew.-Teil des Farbstoffes der Formel (I) und 1,5 Gew.-Teile des Farbstoffes der Formel (II) enthält.

5. Verwendung der Farbstoffmischung gemäss

den Ansprüchen 1 bis 4 im Transferdruck auf halb- oder vollsynthetischem Textilmaterial.

6. Verwendung gemäss Anspruch 5 auf Polyamid 6, Polyamid 6.6, Polyacrylnitril, Cellulosetriacetat oder insbesondere Polyester.

7. Verwendung gemäss den Ansprüchen 5 und 6, wobei die Farbstoffmischung in Kombination mit mindestens einem weiteren, für den Transferdruck geeigneten Farbstoff, zur Anwendung gelangt.

8. Das unter Verwendung der Farbstoffmischung gemäss Anspruch 1 im Transferdruck bedruckte halb- oder vollsynthetische Textilmaterial.

9. Druckfarben auf wässeriger, wässerig-organischer oder organischer Basis enthaltend neben den üblichen Bestandteilen, die Fabrstoffmischung gemäss den Ansprüchen 1 bis 4 und ggfs. weitere transferierbare Farbstoffe.

10. Hilfsträger für den Transferdruck, dadurch gekennzeichnet, dass diese mit Druckfarben gemäss Anspruch 9 bedruckt oder imprägniert sind.

## Claims

1. A mixture of dyes which contains the dye of the Formula (I)

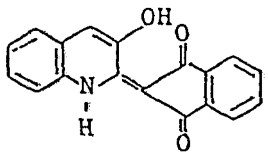

(I)

and the dye of the Formula II

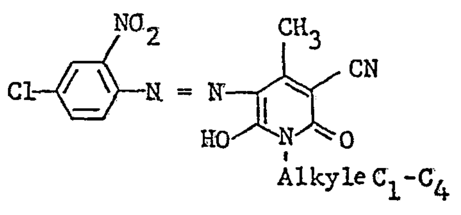

(II)

the dye of the Formula (II) being present in excess.

2. A mixture of dyes according to Claim 1, in which $C_1$-$C_4$-alkyl in the Formula (II) is the ethyl or n-butyl radical.

3. A mixture of dyes according to Claims 1 and 2, which contains 1 part by weight of the dye of the Formula (I) and 1.1 to 3 parts by weight of the dye of the Formula (II).

4. A mixture of dyes according to any one of Claims 1 to 3, which contains 1 part by weight of the dye of the Formula (I) and 1.5 parts by weight of the dye of the Formula (II).

5. Use of a mixture of dyes according to any one of Claims 1 to 4 in transfer printing on regenerated or fully synthetic textile material.

6. Use according to Claim 5 on polyamide 6, polyamide 6.6, polyacrylonitrile, cellulose triacetate or, in particular, polyesters.

7. Use according to either of Claims 5 and 6, wherein the mixture of dyes is applied in combination with at least one further dye suitable for transfer printing.

8. A regenerated or fully synthetic textile material which has been transfer-printed using a mixture of dyes according to Claim 1.

9. A printing ink of aqueous, aqueous-organic or organic base, which printing ink contains, in addition to the customary constituents, a mixture of dyes according to any one of Claims 1 to 4 and which, if desired, contains further transferrable dyes.

10. An auxiliary carrier for transfer printing, which carrier has been printed or impregnated with a printing ink according to Claim 9.

## Revendications

1. Mélange de colorants contenant le colorant de formule (I):

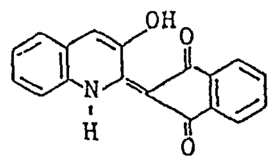

(I)

et le colorant de formule (II):

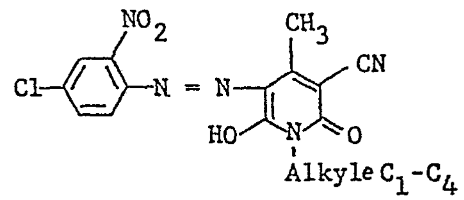

(II)

le colorant de formule (II) étant présent en excès.

2. Mélange de colorants selon la revendication 1, caractérisé par le fait que l'expression «alkyle $C_1$-$C_4$» dans la formule (II) désigne le reste éthyle ou le reste n-butyle.

3. Mélange de colorants selon les revendications 1 et 2, caractérisé par le fait que celui-ci contient 1 partie en poids du colorant de formule (I) et 1,1 à 3 parties en poids du colorant de formule (II).

4. Mélange de colorants selon les revendications 1 à 3, caractérisé par le fait que celui-ci contient 1 partie en poids du colorant de formule (I) et 1,5 partie en poids du colorant de formule (II).

5. Utilisation du mélange de colorants selon les revendications 1 à 4 dans l'impression par transfert sur une matière textile semi-synthétique ou entièrement synthétique.

6. Utilisation selon la revendication 5, sur du polyamide 6, polyamide 6,6, polyacrylonitrile, triacétate de cellulose ou en particulier sur du polyester.

7. Utilisation selon les revendications 5 et 6, dans laquelle le mélange de colorants est utilisé en combinaison avec au moins un autre colorant approprié pour l'impression par transfert.

8. La matière textile semi-synthétique ou entièrement synthétique, imprimée par impression par transfert, en utilisant le mélange de colorants selon la revendication 1.

9. Couleurs d'impression à base aqueuse, hydro-organique ou organique, contenant en plus des constituants classiques, le mélange de colorants selon les revendication 1 à 4 et éventuellement d'autres colorants pouvant être transférés.

10. Supports auxiliaires pour l'impression par transfert, caractérisés par le fait que ceux-ci sont imprimés ou imprégnés avec les couleurs d'impression selon la revendication 9.